# EUROPEAN PATENT APPLICATION

(11) **EP 1 254 865 A1**
(43) Date of publication of application: **06.11.2002**
(21) Application number: 01110513.7
(22) Date of filing: 27.04.2001
(51) Int. Cl.: C02F 11/04, C02F 1/78, C02F 3/12

(54) **Disintegration of Anaerobically digested sewage sludge**

(71) Applicant: VA TECH WABAG GmbH, 1211 Wien (AT)
(72) Inventor: Vranitzky, Robert, 1190 Wien (AT); Gamperer, Thomas, 3021 Pressbaum (AT); Fuchs, Werner, 1070 Wien (AT)
(74) Representative: VA TECH Patente GmbH & Co

(57) **Abstract**

A method and an apparatus for treatment of aqueous organic waste, especially sewage sludge, comprising the stages of thickening (4) the waste, anaerobically digesting (5) the thickened waste and disintegrating (6) the digested residue by cell wall destruction is shown, whereas at least part of the disintegrated matters (12) are fed back to the thickening stage (4). By feeding back the disintegrated matters to the thickening stage the liquid of the disintegrated matters is drawn off and the solids are subjected to anaerobic digestion. Thus the volume of the sludge is reduced.

## Description

The present invention relates to a method for treatment of aqueous organic waste according to the introduction of claim 1 and to a corresponding apparatus according to the introduction of claim 6.

Sludge treatment and disposal systems are entering a period of dramatic change, driven mainly by environmental legislation. Due to the construction of new sewage treatment plants and an increase in the number of sewerage connections, the total production of municipal sewage sludge will rise considerably. Consequently, the quantities of sludge requiring disposal will also multiply.

Most countries recognise that landfill disposal will not be sustainable at present or projected levels far into the future, because of the increasing competition for landfill space, higher costs, more stringent environmental standards and the implementation of policies to promote recycling. The majority of states have formal or practical limits on the physical nature of sludge to be landfilled and have introduced measures to limit the amount of organic matter deposited. Such restrictions are considered necessary, in order to promote the recycling of organic wastes wherever possible.

The growing quantities of sludge generated in urban areas require innovative treatment processes that are capable of achieving significant cuts in mass and volume. Technologies that combine efficient sludge mass and volume reductions with the production of reusable sludge products at competitive costs represent the most desirable solutions. The integration of disintegration technology into the sludge treatment process leads to reduced sludge quantities and markedly improved sludge quality.

Basically, the disintegration process is accomplished by the application of physical or chemical methods to break down cell walls. Thus, cell walls are fragmented and intracellular compounds are released. The product can be utilized both as a substrate in aerobic and anaerobic biological processes.

The document JP 10249376 for example describes a process where the organic sewage is separated into solid and liquid phases. Whereas the liquid phase is treated in the aeration tank, the solids are withdrawn as sludge and subjected to anaerobic digestion. The residual digested sludge is supplied to the aeration tank. The effluent from aeration tank is treated in the final sedimentation tank. After sedimentation sludge is recycled to the aeration tank. Part of the return sludge is extracted and supplied to ozonization. The resulting disintegrated sludge is recycled to the aeration tank, where it is degraded biologically. Similar processes are described in the documents EP-A-0 645 347 and WO 99/09327.

One object of the present invention is to further reduce the residual sludge quantity. The object is achieved by a process according to claim 1. A respective apparatus for treatment of aqueous organic waste is presented in claim 6.

By feeding back the disintegrated matters to the thickening stage the liquid of the disintegrated matters is drawn off and the solids are subjected to anaerobic digestion. Thus the volume of the sludge is reduced, whereas according to the state of the art disintegrated sludge is recycled into the aeration tank without antecedent solid-liquid phase separation.

Favourable implementations of the invention are presented in claims 2 to 5 and 7 to 10.

For example using ozone for disintegration has some advantages: In comparison with mechanical or thermal disintegration technologies, the oxidation processes have one main advantage in common. Refractory COD (complex organic structures) is oxidised and converted to BOD (biodegradable low-molecular compounds, e.g. formic acid or acidic acid). Conversely, as opposed to other oxidation processes (such as wet-oxidation), ozonization does not demand an additional chemical dosage. As a result, effluent post-treatment is not required downstream of the process. The only by-product of the ozonization process is molecular oxygen, which can be positively reused for aerobic biological degradation processes.

Furthermore, ozone is a highly reactive oxidation agent and therefore, only small amounts of gas (0.1-0.15 g O3/g SS) have to be injected, in order to carry out sludge disintegration. As compared with other types of municipal wastewater and sludge treatment plants, the ozonization unit is rather small. Moreover, further developments in the fields of (a) ozone generation, (b) gas injection system and (c) reaction tank design will lead to increased process efficiency.

The present invention shall be described by an example according to the schematic figure, which shows a wastewater and sludge treatment system according to the invention.

The wastewater 9 purified in primary sedimentation 1 is fed to the wastewater treatment unit 2, the liquid 10 further purified in the wastewater treatment unit 2 is fed to the settlement tank 3 and the liquid further purified in settlement tank 3 is withdrawn as purified water 11. Excess sludge is withdrawn from primary sedimentation 1, which is fed with wastewater 8, as primary sludge 14 and from settlement tank 3 subsequent to the wastewater treatment unit, here the biological purification unit 2, as surplus activated sludge 15. Both sludge types 14,15 are subjected to pre-thickening 4 and subsequently (reference numeral 8) to anaerobic digestion 5. The digested sludge (100-300% of digester volume) 16 is continuously fed into the sludge disintegration unit 6, which unit is using ozone. The ozone supply of the sludge disintegration unit 6 consists mainly of an ozone generator and a gas injection system, which feeds ozone to a reaction tank of the sludge disintegration unit 6. After a certain reaction time (approx. 30 min, dependant on the efficiency of the gas injection system), the treated sludge 12 is released from the disintegration unit 6 and recycled to the thickening facility 4. At that process stage a solid-liquid phase separation of all three sludge types (a) primary sludge 14, (b) surplus activated sludge 15 and (c) disintegrated digested sludge 12 is accomplished. The supernatant liquid phase 7 is recycled to the wastewater treatment unit 2, whereas the thickened solid phase 8 is fed into the anaerobic digestion tank 5. The residual sludge (80-90% inorganic compounds) 13 is discharged.

Thickening is a procedure to increase the solids content of sludge by removing a portion of the liquid fraction. For example, if surplus activated sludge, which is typically pumped from secondary settlement tanks with a content of 0.8% dry substance, can be thickened to a content of 4% dry substance, then a five-fold decrease in sludge volume is achieved. Thickening is generally accomplished by physical means including gravity settling, flotation or centrifugation.

The process of anaerobic digestion depends on the microbiological degradation of the proteins, carbohydrates, lipids and other degradable organic matter present in raw sewage sludge and their conversion into biogas, comprised of methane and carbon dioxide in the absence of air. These metabolic processes result in some bacterial growth, but the cell yield from anaerobic biosynthesis is much smaller than that occurring in aerobic processes and the production of new solids in anaerobic systems is of immaterial significance.

Typically, only about 50% of the organic matter in sludge is readily susceptible to anaerobic biodegradation into a gas, the other half of the organic material being more recalcitrant (e.g. ligno-cellulosic material) and degrading only very slowly. Sludge which is anaerobic digested is biologically stable (no longer has the propensity to ferment).

The liquid phase 7 contains dissolved organic compounds (such as amino acids, nucleic acids and fatty acids) which are released with the cytoplasm. It can be utilized as a carbon source to balance the additional carbon demand in the denitrification process during periods of high nitrogen loading rates. On the other hand, the solid phase 8 contains cell fragments (biosolids), which also represent a good substrate for biodegradation, as the refractory COD was converted into BOD. The recycling of disrupted and disintegrated biosolids 12 to anaerobic digestion 5 has a number of attractive aspects, which are described in the following section.

The anaerobic digestion 5 of disintegrated biosolids enables advanced sludge stabilization due to the enhanced reduction of organic matter. Moreover, the residual sludge quantity can be slashed by another 30-40% (total sludge reduction up to 60%). The rate-limiting step of the AD-process is the initial lysis phase. When sludge disintegration is employed, this reaction is accelerated. Hence, the sludge retention time in the AD reactor 5 can be cut from the standard 15-20 days to below 10 days. As a consequence, the digester volume can be reduced, which leads to savings in investment and operating costs. The operating costs are influenced in two respects, (a) lower demand on reactor heating and (b) the conversion of refractory COD to BOD, providing higher biogas yields and hence increased electricity generation from biogas. Finally, due to the destruction of filamentous flocs (responsible for water retention in the sludge) during disintegration, the dewatering properties of the residual sludge are improved.

The process according to the invention can be applied to the conventional wastewater treatment system, consisting of mechanical pretreatment, biological purification and chemical precipitation. It suites for all types of wastewater treatment processes (single-stage-, two-stage activated sludge-, Sequencing Batch Reactor (SBR) process etc.).

For example, according to the described invention the design of the main structures of a sludge treatment plant for a conventional wastewater treatment plant with a capacity of 20,000m³ /day would be as follows:

| | | |
|---|---|---|
| Anaerobic Digester | Sludge Retention Time, t_{R} | 10 [days] |
| | Volumetric Loading | 3 - 5 [kg/m³day] |
| | Digester Volume | 1,500 [m³] |
| | | |
| Disintegration Unit | Reaction Time | approx. 30 [min] |
| | Reaction Tank Volume | 3 - 5 [m³] |
| | Specific Ozone Demand | 0.1 - 0.15 [kg O₃/kg SS] |
| | Capacity of Ozone Generator | 20 [kg O₃/h] |

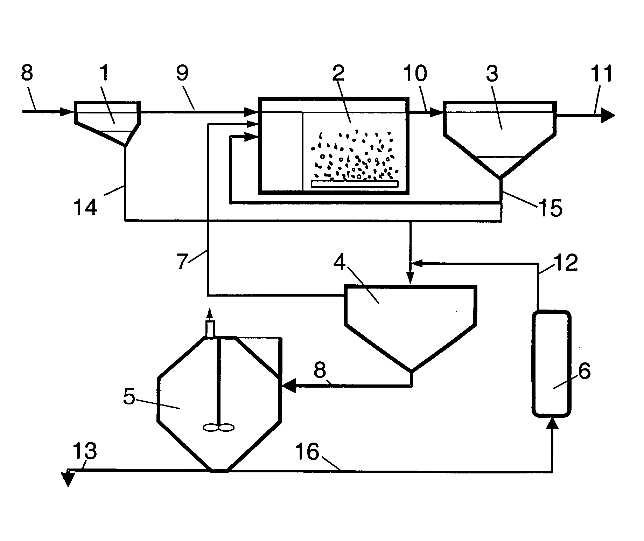

## Claims

1. Method for treatment of aqueous organic waste, especially sewage sludge, comprising the stages of thickening the waste, anaerobically digesting the thickened waste and disintegrating the digested residue by cell wall destruction, **characterized in that** at least part of the disintegrated matters are fed back to the thickening stage.

2. Method according to claim 1, **characterized in that** ozone is used in the disintegration stage.

3. Method according to claim 1 or 2, **characterized in that** the organic waste comprises primary sludge from a primary sedimentation stage.

4. Method according to one of the claims 1 to 3, **characterized in that** the organic waste comprises activated sludge from a biological purification stage.

5. Method according to one of the claims 1 to 4, **characterized in that** the liquid phase separated in the thickening stage is fed back to a biological purification stage.

6. Apparatus for treatment of aqueous organic waste, especially sludge, comprising means (4) for thickening the waste, means (5) for anaerobically digesting the thickened waste and means (6) for disintegrating the digested residue by cell wall destruction, **characterized in that** the means (6) for disintegrating is connected to the means (4) for thickening the waste for the purpose of feeding back at least part of the disintegrated matters (12) to the means (4) for thickening the waste.

7. Apparatus according to claim 6, **characterized in that** the means (6) for disintegrating has an ozone supply.

8. Apparatus according to claim 6 or 7, **characterized in that** the means (4) for thickening the waste comprise means for feeding primary sludge (14) from a primary sedimentation unit (1) to the means (4) for thickening the waste.

9. Apparatus according to one of the claims 6 to 8, **characterized in that** the means (4) for thickening the waste comprise means for feeding activated sludge (15) from a biological purification unit (2) to the means (4) for thickening the waste.

10. Apparatus according to one of the claims 6 to 9, **characterized in that** the means (4) for thickening the waste comprise means for feeding the separated liquid phase (7) back to a biological purification unit (2).
